# EUROPEAN PATENT SPECIFICATION

(11) **EP 1 924 349 B1**
(45) Date of publication and mention of the grant of the patent: **27.01.2010**
(21) Application number: 06787918.9
(22) Date of filing: 19.07.2006
(51) Int. Cl.: B01J 8/24, C01B 33/02

(54) **SILICON SPOUT-FLUIDIZED BED**
SILIZIUMSPRUDELBETT
LIT FLUIDISE AVEC GICLAGE DE SILICIUM

(30) Priority: 19.07.2005 US 700964 P
(43) Date of publication of application: 28.05.2008
(73) Proprietor: REC Silicon Inc., Moses Lake, Washington 98837-9505 (US)
(72) Inventor: EGE, Paul, Edward, Markham, ON L3P 1J6 (CA); HANSEN, Jeffrey, A., Moses Lake, WA 98837 (US); ALLEN, Levi, C., Warden, WA 98857 (US)
(74) Representative: Stainthorpe, Vanessa Juliet
(86) International application number: PCT/US2006/028112
(87) International publication number: WO 2007/012027

(56) References cited:
- WO-A-2004/013044
- US-A- 4 424 199
- US-A- 5 798 137
- US-A- 5 810 934

## Description

### BACKGROUND AND SUMMARY

The present invention relates to pyrolytic decomposition of a silicon-bearing gas in a fluidized bed to produce polysilicon.

Polycrystalline silicon (polysilicon) is a critical raw material for both the semiconductor and photovoltaic industries. While there are alternatives for specific applications, polysilicon will be the preferred raw material in the foreseeable future. Hence, improving the availability of and economics for producing polysilicon will increase the growth opportunities for both industries.

The majority of polysilicon is produced by the Siemens hot-wire method with silane or trichlorosilane as the silicon-bearing gas source. The silicon-bearing gas, usually mixed in other inert or reaction gases, is pyrolytically decomposed and : deposited onto a heated silicon filament. The filament temperature needs to be carefully controlled to deposit polysilicon evenly and thus produce a smooth polysilicon rod. The Siemens process requires large amounts of energy per kg polysilicon produced and then substantial manual efforts to convert polysilicon rods into smaller chunks required for crystal growing.

Many have considered pyrolytic decomposition of silicon-bearing gas in fluidized beds an attractive alternative to produce polysilicon for the photovoltaic and semiconductor industries due to excellent mass and heat transfer, increased surface for deposition and continuous production. Compared with the Siemens-type reactor, the fluidized bed reactor offers considerably higher production rates at a fraction of the energy consumption. The fluidized bed reactor can be continuous and highly automated to significantly decrease labor costs.

Most prior fluidized bed reactors associated with pyrolytic decomposition of silicon-bearing have used traditional distribution plates to introduce fluidizing gas. The fluidizing gas, which typically is a combination of a silicon-bearing gas and other gases, is injected with sufficient overall flow rate to fluidize the silicon particles. Distribution plates contain a large number of orifices, often oriented horizontal or downward. There is a common plenum to the distribution plate so all the fluidizing gases enter the distribution plate orifices simultaneously. Because there is no control of gas distribution between the orifices they are inherently unstable. Distributor designs are prone to silicon deposition on the plate and high powder production. Deposition has been reduced in some instances with water-cooled distributor plates. However this creates create a large heat sink which significantly reduces the energy efficiency of a fluidized bed reactor.

U.S. Pat. No. 5,810,934 describes a fluidized bed reactor having a single spout nozzle for the fluidizing gases. Unlike typical distributor orifices, the spout nozzle is oriented upwardly to promote a spout circulation pattern. The spout discharges into an upper bed which behaves like a traditional fluidized bed. This type of system is referred to herein as a "submerged spouted bed." The spout provides a well controlled circulation in the lower region while the fluidized bed region provides residence time for complete conversion and "scavenging" of silicon powder contacting hot silicon granules.

Prior silicon spout nozzle designs include regions of reduced particle movement in and around the spout base. Reduced movement could allow recently formed silicon powder having non-bonded electrons to adhere to the spout chamber surface and form undesired silicon deposits. Deposits near a spout nozzle can completely engulf it and reduce silicon production efficiency and duration. Previous designs mention cooling the spout nozzle to keep the silicon-bearing gas inlet temperature below a certain temperature to prevent deposition of silicon inside the spout nozzle but do not address the fundamental issue of silicon deposition on and around the nozzle surface within the spout chamber.

A continuing need thus remains for efficient formation of polysilicon by pyrolytic decomposition of a silicon-bearing gas and deposition of silicon onto fluidized silicon particles.

### BRIEF DESCRIPTION OF THE DRAWINGS

In the drawings:
FIG. 1 is a schematic cross-sectional elevational view of an open configuration multiple augmented submerged spout fluidized bed reactor for silicon production with an ellipsoid chamber, three nozzles and central withdrawal.
FIG. 2A is an enlarged partial schematic cross-sectional elevational view of spout chamber of FIG. 1.
FIG. 2B is an enlarged partial schematic cross-sectional elevational view of spout chamber of FIG. 1, depicting the area where uncontrolled silicon deposition may occur (shaded).
FIG. 2C is an enlarged partial schematic cross-sectional elevational view of one spout nozzle of FIG. 1.
FIG. 3 is an enlarged schematic cross-sectional view taken along line 3-3 of FIG. 1.
FIG. 4A is a schematic cross-sectional elevational view of an elliptic bottom spout chamber for a submerged spout fluidized bed reactor for silicon production with a single nozzle and side withdrawal.
FIG. 4B is a schematic cross-sectional elevational view of a flat bottom spout chamber for a submerged spout fluidized bed reactor for silicon production with a single protruded nozzle and side withdrawal.
FIG. 5 is a schematic cross-sectional elevational view of a spout fluidized bed spout nozzle with secondary orifices for a submerged spout fluidized bed reactor for silicon production.
FIG. 6A is a schematic cross-sectional elevational view of a conical bottom spout chamber for a submerged spout fluidized bed reactor for silicon production with a single protruding spout nozzle, vertical lower secondary orifices, angled upper secondary orifices and side withdrawal.
FIG. 6B is a schematic cross-sectional elevational view of a conical bottom spout chamber for a submerged spout fluidized bed reactor for silicon production with a single spout nozzle, angled secondary orifices and side withdrawal.
FIG. 7 is a schematic cross-sectional view from above of a submerged spout fluidized bed reactor, depicting a spout fluidized bed spout nozzle with six secondary orifices.
FIG. 8 is a schematic cross-sectional elevational view of a closed configuration multiple augmented submerged spout fluidized bed reactor for silicon production having plural elliptic bottom spout chambers, each with single nozzle, side withdrawal and possible central overflow withdrawal.
FIG. 9A is a reduced schematic cross-sectional view taken along line 9-9 of FIG. 8 and depicting an embodiment having four individual spouting chambers, each with a side withdrawal to a central outlet.
FIG. 9B is a reduced schematic cross-sectional view taken along line 9-9 of FIG. 8 and depicting an embodiment having six individual spouting chambers, each with a side withdrawal to a central outlet.
FIG. 9C is an enlarged schematic cross-sectional view taken along line 9-9 of FIG. 8 and depicting an embodiment having ten individual spouting chambers, each with a side withdrawal to a central outlet.
FIG. 10 is a schematic view of a flow control system for an open configuration multiple augmented submerged spout fluidized bed reactor for silicon production with three independently controlled spout nozzles and three independently controlled sets of secondary orifices.

### DETAILED DESCRIPTION

Described herein are efficient techniques and apparatuses that employ submerged spouted bed technology for the formation of polysilicon by pyrolytic decomposition of a silicon-bearing gas and deposition of silicon onto fluidized silicon particles or granules circulated by one or more spouts inside a reaction vessel. Various described techniques and apparatus configurations enhance silicon production efficiency.

For best results, a nozzle used to produce a submerged spouted bed should not be larger than 25 times the average granule diameter and nozzle velocities are limited. Thus a single nozzle can only provide a limited amount of fluidizing gas to a vessel with particles of a given average size.

To overcome this limitation, multiple parallel spouts can be submerged within a single larger diameter fluidized bed. This approach combines the process benefits of individually well controlled spout regions with the economics of a large fluidized bed for a superior and economic design. A system with multiple spouts is referred to herein as a "multiple submerged spouted bed."

A multiple submerged spouted bed for the production of silicon can have from two to ten or more submerged spouts depending on vessel diameter and shape. Best results are achieved when each individual spout is fed by a separate gas supply so the flow and composition at each spout can be independently controlled. This is a significant difference from fluidized bed reactors having distribution plates where all orifices receive gas from a central plenum and there is no control of the gas distribution between orifices. Another significant difference between multiple spouts and a distributor plate is the spacing. Spout nozzles best are spaced a sufficient distance apart to minimize the risk of interference between spouts. The minimum distance between spout nozzles in multiple spouted beds should be about 10 cm and the number of spout nozzles per square meter should not be more than fifty. In contrast, distributor plate orifices typically are spaced much closer.

Deposition problems can be addressed by enhancing the spout design with jets in close proximity to the spout nozzle. The jet flow saturates and fluidizes particles around the spout to keep the spout base surface around the nozzle limited in silicon-bearing gas and silicon powder that could otherwise deposit. This maintains production rates and secures long-term continuous production of polysilicon particles. These jets positioned near the spout nozzle are referred to herein as "secondary jets," indicating that the primary flow is in the spout nozzle. The technique with one or more submerged spouts and secondary jets is referred to herein as an "augmented submerged spout fluidized bed." A vessel containing fluidized silicon particles suspended by upwardly flowing fluidizing gas from multiple submerged spouts and secondary orifices is referred to herein as a "multiple augmented submerged spout fluidized bed" reactor. The shape, proximity to the spout, number and orientation of the secondary orifices can all be used in a variety of combinations to control particle and gas circulation near the spout nozzle and practically eliminate silicon deposition at spout nozzle surface within a spout chamber.

The potential for spout chamber deposition also can be reduced by protruding the spout nozzle into the spout chamber thus improving movement around the spout and reducing contact between silicon-bearing gas and chamber walls. Protruded nozzles can be designed to minimize stagnant regions where silicon particles or powder can adhere while minimizing erosion from particle movement around the protrusion. Secondary orifices may be added to further reduce risk of deposition around the primary nozzle.

Reduction or elimination of the formation of silicon deposits in the spout chamber thus can be achieved by eliminating stagnation zones at or near each spout nozzle through the use of secondary jets near the spout nozzle, the spout chamber design, the spout nozzle design, and combinations thereof. To further reduce the risk for deposition the spout nozzle can be cooled.

To achieve deposition of silicon on particles in a reactor, the fluidizing gas will include a "silicon-bearing gas," namely, a gas selected from the group consisting of silane (SiH₄), disilane (Si₂H₆), higher order silanes (SiₙH₂ₙ₊₂), dichlorosilane (SiH₂Cl₂), trichlorosilane (SiHCl₃), silicon tetrachloride (SiCl₄), dibromosilane (SiH₂Br₂), tribromosilane (SiHBr₃), silicon tetrabromide (SiBr₄), diiodosilane (SiH₂I₂), triiodosilane (SiHI₃), silicon tetraiodide (SiI₄), and mixtures thereof. The fluidizing gas may also include a "halogen-containing gas," such as any gas of the group consisting of chlorine (Cl₂), hydrogen chloride (HCl), bromine (Br₂), hydrogen bromide (HBr), iodine (I₂,) hydrogen iodide (HI), and mixtures thereof. Finally, the fluidizing gas may include an "inert gas" such as nitrogen (N₂), hydrogen (H₂), helium (He), argon (Ar), neon (Ne), or mixture thereof. The total gas delivered into the reactor through any set of nozzles and orifices constitute the fluidizing gas. It is best to deliver an amount of fluidizing gas sufficient to fluidize at least a majority of the particles in the vessel while allowing large particles to segregate to the bottom for withdrawal.

Also the amount of silicon-bearing gas delivered to the spout(s) should be sufficient to maintain the desired deposition of silicon onto the particles inside the reactor.

Silicon from the silicon-bearing gas deposits through chemical vapor deposition onto the silicon particles in the bed as polycrystalline silicon (polysilicon) but may also decompose homogeneously to form silicon powder which either deposits onto silicon particles through scavenging, agglomerates to small particles, or exits as dust with exhaust gas. Both chemical vapor deposition and scavenging cause the silicon particles in the reactor vessel to grow. The average particle size within the reactor vessel is maintained around a desired size by preferentially removing larger particles, creating new small particles (seeds) within the reactor (self-seeding), recycling seeds separated from removed product, recycling seed created by crushing a portion of removed product, or any combination thereof.

Decomposition heat can be supplied to the reactor in any of several ways including by wall heaters, by other energy sources such as, but not limited to, microwave, by preheating silicon-bearing gas and other fluidizing gases, addition of hot gases to sections of the reactor, and by combinations thereof. Another heat source is injection of a reactive substance through the at least one secondary orifice to heat the region of the spout by energy released from an exothermic reaction of the reactive substance at the region of the spout and thereby heat the particles in the spout. Reactor temperature should be in the range of the decomposition and deposition temperature for the silicon-bearing gas being used. For production with silane or higher order silanes as the silicon-bearing gas, optimum performance is at temperatures above 450°C. Operating pressure can be from 0.1 bar to 10 bar depending on the silicon-bearing gas and other production requirements.

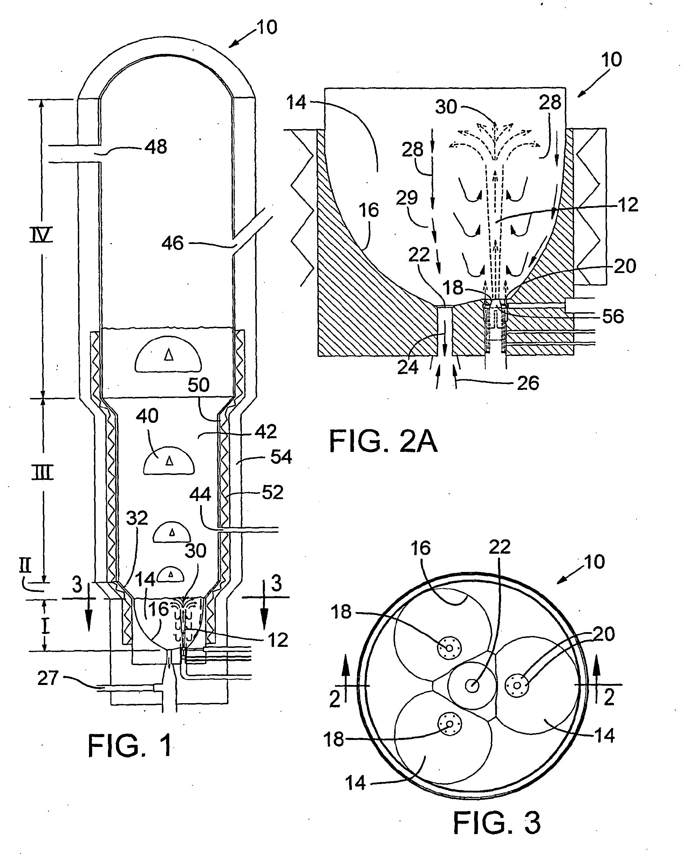

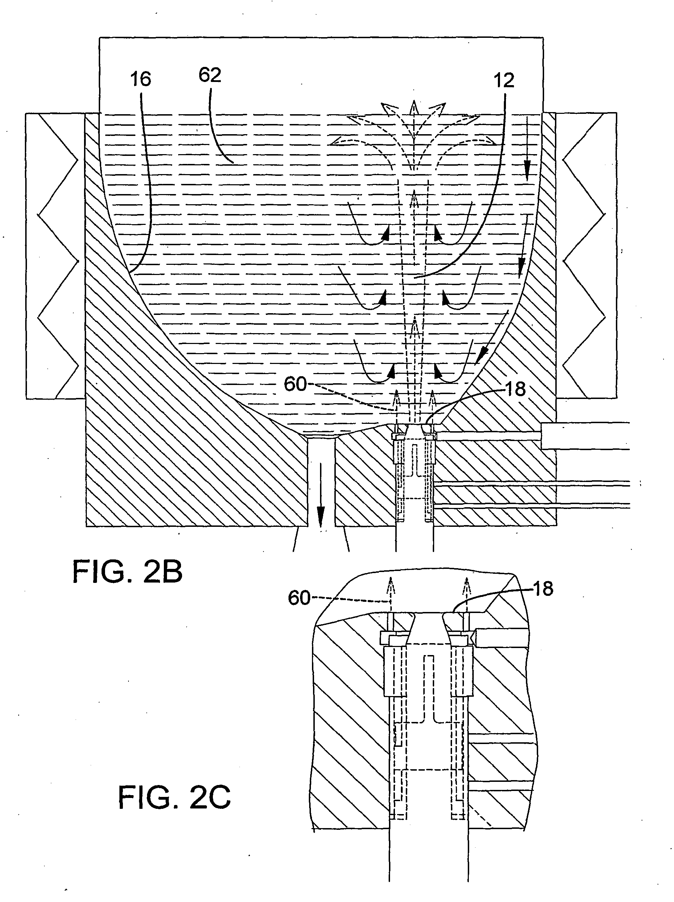

FIG. 1 shows a multiple augmented submerged spout fluidized bed reactor vessel 10 for silicon production. FIGS. 2 and 3 show details of the bottom of the vessel. The vessel defines a chamber that includes four regions from bottom (gas inlet) to top (gas and powder outlet). The lowest region is the spout chamber (I) where influent fluidizing gas enters through spout nozzles 18. The illustrated system has three spout nozzles that produce three parallel spouts 12 in a single spout chamber. As is discussed herein, other configurations can employ one or more individually controlled parallel spouts in each of one or more separate spout chambers. A spout chamber 14 is defined by a wall 16 shaped to stabilize the spout circulation and includes a spout nozzle 18 surrounded by one or more secondary orifices 20. One or more product outlets 22 can be provided to withdraw larger particles that may accumulate at the bottom of the reactor through an outlet line 24. This product outlet line 24 can have a countercurrent gas flow 26 injected through gas supply line 27 to de-dust the product particles as they flow by gravity to product handling. The gas flow 26 best will consist of halogen-containing gas, inert gas, or a mixture thereof. Higher velocities may be used to entrain smaller particles and recycle them back into the reactor.

Gas entering through the spout nozzle 18 creates a submerged spout circulation within the chamber 14 with a dilute upward flow (spout) 12 of gas and particles from the nozzle and a dense downward flow of particles in the annular region 28 surrounding the spout and limited by the chamber walls 16. Particles flowing down in the annulus 28 are entrained back into the gas moving upwardly from the nozzle 18 and thus reenter the spout 12 for another loop. A significant portion of the silicon-bearing gas conversion to silicon can take place in the spout region 14, mostly within the spout 12; and the silicon is either deposited onto the particles or converted to powder through nucleation or attrition.

The upper end of the spout chamber is at the beginning of the transition region (II). The top of each spout 30 disengages into this transition region (II). This is the region between the developed spout 12 below and a developed common fluidized bed zone above. The transition is located near the maximum spout height, estimated from correlations and verified in cold inert tests. The spout top 30 best is located in the transition region. The wall 32 which defines the region can be cylindrical or tapered or any combination thereof but best results are achieved by employing some kind of a tapered expansion within the transition region. The taper can have a wide range of angles from vertical (0°) to abrupt (about 45°) but typically is to be around, or steeper than, the particulate angle of repose. If the angle is too small the expansion effect is limited while if the angle is too shallow, particles may settle and agglomerate on the transition walls 32. A tapered expansion increases the overall area to reduce the gas velocity so that large particles segregate by gravity back down to the spout chamber where they can continue to grow in the spout and eventually be removed.

The transition region transfers the gas and powder to, and exchanges particles with, a dense fluidized bed region (III) above. The reactor wall in the fluidized bed region (III) is sized and shaped to contain beads in a bubbling fluidized bed. In particular, the area of the fluidized bed region is designed with a superficial velocity adequate to maintain a slow bubbling bed so that most of the particles are well mixed while larger particles segregate towards the bottom and enter the spouted bed through the transition. The objective is to maintain particles in a dense phase bubbling fluidized bed where dilute pockets of gas and particles, defined as the bubbles 40, flow upwardly and stir a dense continuum of particles and gas defined as the emulsion 42. The reduced gas velocity increases the gas residence time to allow for additional conversion of remaining silicon-bearing gas. The vigorous mixing caused by the bubbling action creates excellent contact between powder within the gas and the hot particles so they can capture powder by scavenging and annealing onto existing particles. Powder particles may also agglomerate onto themselves to form small particles which may serve as seed material. Both mechanisms are further enhanced by the deposition of silicon from unconverted silicon-bearing gas. There will also be some exchange of particles between the spout and the fluidized bed through regular mixing. Bubbles 40 coalesce and grow as they rise up through the bed. Depending on the desired bed height, there may be one or more additional tapered expansions within the bed region to further reduce the upper fluidization velocity. A sufficient total flow of gas should be maintained through spout nozzles and secondary orifices to fluidize particles above spout in the bubbling fluidized bed. But there can be several ports 44 through the vessel wall in the fluidized bed region. Additional gases may be added through these ports to the fluidized bed region to provide heat or extra fluidization or to promote attrition for self-seeding. Ports can also be used to recycle small particles or agglomerated powder for seed, introduce special instrumentation or possibly to withdraw product of a different particle size distribution than the product outlet 22 in the spout chamber. If needed, internals can be added to this region to promote smoother fluidization and add extra heating surface.

The bubbles 40 release from the fluidized bed into the dilute freeboard region (IV), where small particles may exit the bed (III) with the gas but larger particles disengage and fall back into the bed. Small particles or powder with terminal velocity smaller than the gas velocity can be entrained out with the exiting gas. There are several ports in the freeboard region as well. The two major ports are particle feed port 46 and gas outlet 48. The particle feed port best is located above the splash zone, and the gas outlet best is located above the Transport Disengagement Height, a height where entrainment is stable. As in the fluidized bed region (III) other ports 44 could be added, for example to recycle small particles or add instrumentation.

The three regions above the spout chamber, regions (II), (III), and (IV), are collectively referred to herein as the "upper bed region."

The vessel 10, and other vessels described herein, can be constructed in any material that is acceptable within the expected pressure, temperature and stress requirements or other construction constraints. The vessel could be made in a material having a high silicon content, for example high temperature quartz. Alternatively the vessel structure could be constructed in high temperature metal alloys such as, but not limited to, Incoloy^{®} and Hastalloy™ alloys. The inner vessel wall 50 may or may not be lined, in parts, with a material that tolerates the operating temperatures and protects the silicon particles from contacting the structural vessel wall. Such a liner could be any material high in silicon such, as but not limited to, mono and polycrystalline silicon (Si), silicon carbide (SiC), silicon carbide coated graphite (C), silica (SiO₂) and silicon nitride (SiN). Other non-silicon materials include, but are not limited to, tungsten carbide (WC) and molybdenum (Mo). The primary purpose of this inner lining is to provide a non-contaminating surface facing the silicon particles within the vessel or regions of the vessel, mostly within regions (I) to (III) where the density of particles is highest.

Heat is typically added to the reactor by heating the inner wall 50 of the reactor in any region with, for example, resistance wall heaters 52. Other methods are also possible, such as but not limited to, preheating gases entering reactor, microwave heating of gases or portions of reactor, radiation heating or chemical reaction heating. To keep the added energy within the reactor, it should be surrounded with insulation 54.

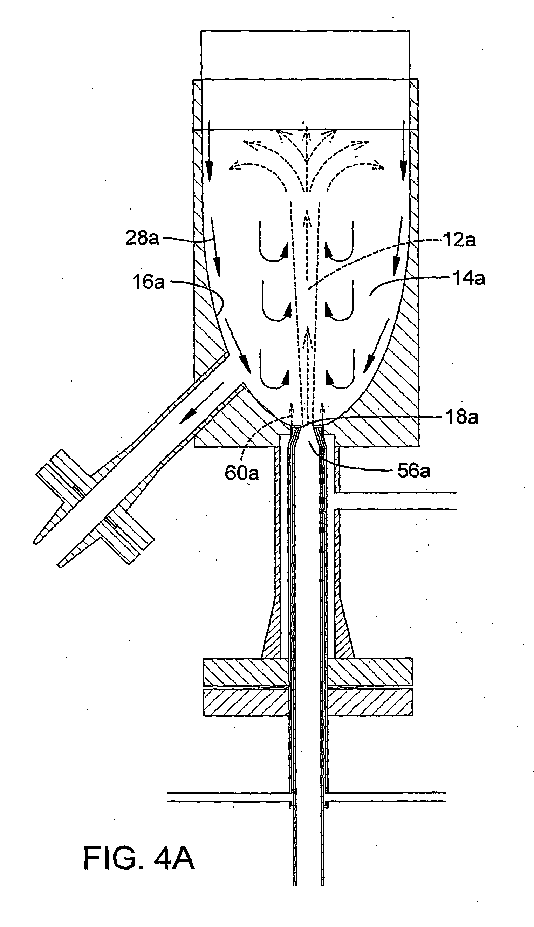

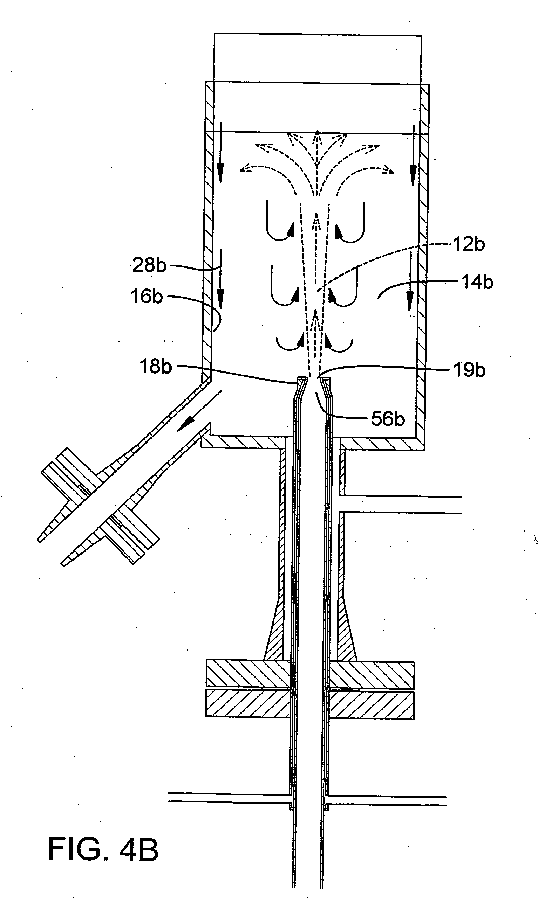

FIGS. 2A, 4A, and 4B illustrate some spout chamber details. Silicon-bearing gas, halogen-containing gas, inert gases, or any mixture thereof, enter the reactor through the vertical spout nozzles 18, 18a, 18b at flow rates sufficient to create the characteristic spouted circulation pattern within the spout chamber 14, 14a, 14b. The circulation pattern is characterized by a dilute mix of gas and particles flowing upwards from the nozzle 18, 18a, 18b in the spouting chamber 14, 14a, 14b. This is the spout 12, 12a, 12b and is different from a fluidized bed distributor jet in that it is narrow and elongated without the characteristic fan shape of a jet. Furthermore a spout is continuous and stable without the fluctuations typical of a distributor jet. The submerged spout eventually collapses as it reaches the maximum height and disintegrates to enter the transition zone above. The dilute spout is surrounded by a concentric, annular, dense flow of particles 28, 28a, 28b downwardly along the wall 16, 16a, 16b of the spout chamber back to the spout entrance 18, 18a, 18b. The gas flow rate through the spout nozzle 18, 18a, 18b is set to achieve a flow rate above the "minimum spouting velocity" while keeping the "maximum spout height" so the top of the spout 30 does not extend substantially past the end of the spout chamber to the transition region (II). Both minimum spouting velocity and maximum spout height are estimated from correlations in the spouted bed literature and verified in tests.

Appropriate design of the spout nozzle provides stable spouting. Typically the nozzle will be designed for high velocity but limited pressure drop to allow maximum control. It is advantageous, but not always necessary, to have a restriction 56, 56a, 56b near the nozzle discharge to stabilize the spout as much as possible. This restriction could be a tapered reduction as illustrated but many other configurations are also possible, ranging from no restriction to sharp edge orifice and complex designs with restrictions that add rotation or additional motion to enhance the spout properties.

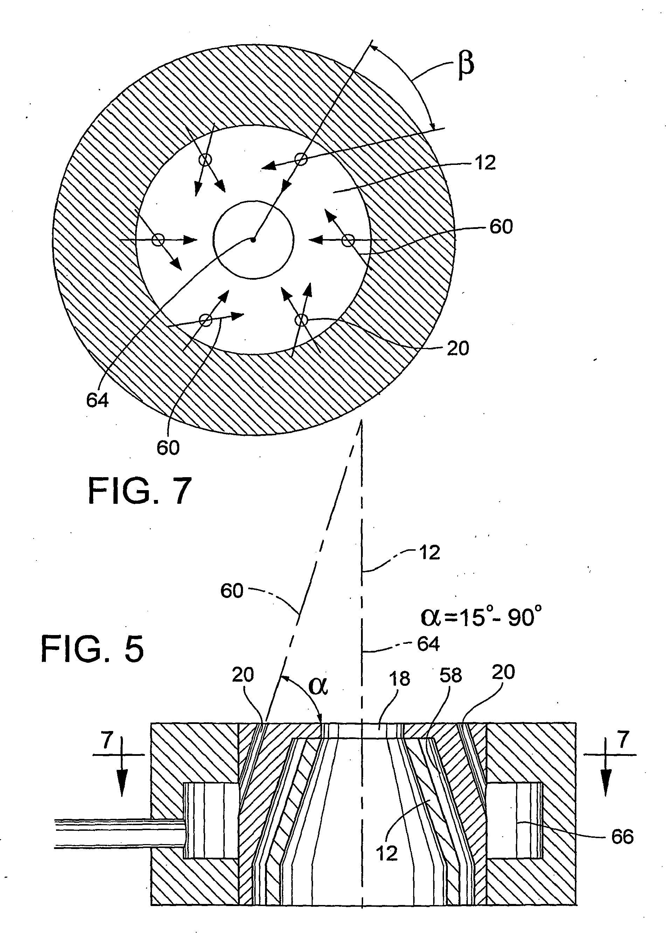

FIG. 5 shows a nozzle in more detail, the nozzle may have a cooling channel 58 around the spout nozzle 18. This arrangement maintains a surface temperature below that of silicon deposition around the nozzle 18 when preheating the spout nozzle gases as close to deposition temperature as possible, and secondary jet temperatures possibly above this. Maintaining a surface temperature below that of silicon deposition avoids silicon depositing on the surface of the nozzle.

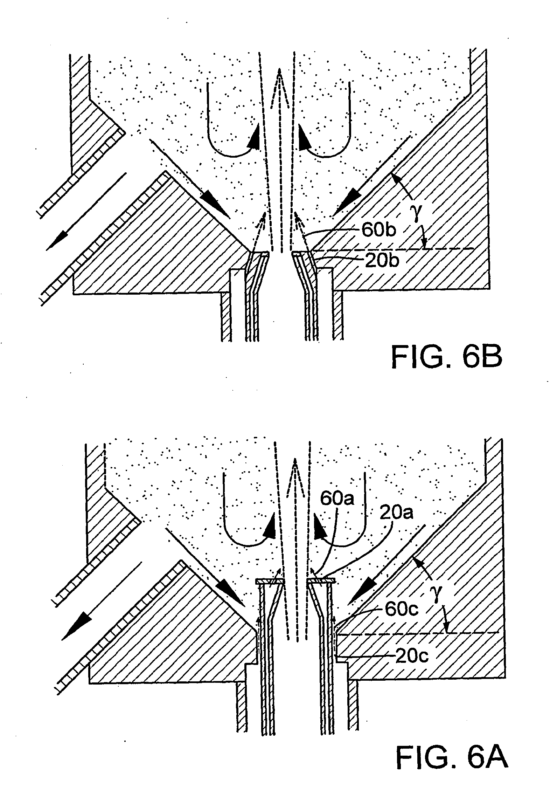

The spout nozzle 18b may protrude into the spout chamber as shown in FIGS. 4B and 6A. This further inhibits contact between silicon-bearing gas and hot spout chamber walls. The protrusion can be any length as long as the tip 19b of nozzle 18b, defined as the point of gas entry to the vessel, remains within the spout chamber. Thus the tip cannot extend into the transition region.

Surrounding each spout nozzle is one or more secondary orifices 20 best illustrated in FIGS. 2C and 3. Inert gas, halogen-containing gas, or a mixture thereof enters through the secondary orifice(s) 20 to create jets 60 that promote and maintain particle movement in the annular region and near the spout nozzle because stagnation could lead to silicon deposition and production interruptions. The main uses of these secondary jets 60 are to dilute the regions near the spout nozzle 18, stimulate particle circulation, and enhance particle movement around the spout nozzle so that dendrite formation sites are not formed. The secondary jets are particularly useful when silicon-bearing gas is introduced into a reactor well above the critical nucleation temperature and is sensitive to deposition. Such deposition, combined with stagnant areas can eventually lead to significant silicon deposits that could stop production. Appropriately placed secondary jets inhibit the growth of silicon deposits.

The region 62 of highest possibility for agglomeration and silicon deposition is illustrated in FIG. 2B. The area encompasses most of the spout chamber wall 16 although the most significant region is near the spout nozzle 18 where high concentrations of silicon-bearing gas may contact walls or stagnant particles at temperatures higher than critical nucleation temperature. Because the secondary jets 60 promote particle entrainment into the spout 12 they increase spout particle density. This improves silicon deposition rates, shifting conversion to particle growth instead of powder production. Thus, the secondary jets 60 are also useful in general operation and control.

FIG. 5 shows vertical orientations, α, of the secondary orifices 20 while FIG. 7 illustrates horizontal jet directions β. FIG. 5 shows one embodiment with jets 60 inclined toward the spout 18 to force particles near the spout to flow into the spout. The angle α with respect to vertical can be varied between about 15° and 165°, 90° being vertical, i.e. parallel to the nozzle centerline 64 as illustrated in FIG. 5. FIG. 4A shows jets 60a that extend substantially vertically. FIG. 7 illustrates possible jet orientations, as viewed looking downwardly from above. Each jet 60, as viewed from the top, can be directed anywhere from radially inwardly directly at the centerline 64 of the spout nozzle (horizontal angle β= 0°) to the opposite orientation, radially outwardly β= 180°). In other words, the secondary orifice 60 is positioned to inject gas upwardly into the chamber as a jet that extends in the horizontal direction at an angle from 0° to 180° with respect to the line between orifice centerline and the centerline 64 of the spout produced by the spout nozzle, 0° being the line itself. In FIG. 7, two of the possible horizontal orientations are illustrated for each orifice 20. A first illustrated possible jet orientation is radially inwardly, horizontal angle β= 0°. A second illustrated possible jet orientation is horizontal angle β= about 50°, which encourages a swirling motion around the spout. It should be understood that, although FIG. 7 shows two jet orientations for the sake of illustration, in actuality each illustrated orifice 20 produces only a single jet. The direction of any given jet can be any variation of the above-described vertical angle a and horizontal angle β.

Secondary orifices conveniently can all be located at the same elevation as shown in FIGS. 1-3. Or for even greater control, secondary jets can be provided at two or more elevations. For example, FIG. 6A shows a system with a single protruding spout nozzle, vertical lower secondary orifices 20c that produce vertically oriented jets 60c and angled upper secondary orifices 20a that produce angled jets 60a.

An example of a secondary orifice design is illustrated in FIG. 5. Typically the length of the gas feed passageway will be at least several times the diameter of the secondary orifice 20, thus allowing for the creation of directional jets suitable for the dendrite elimination. The orifices 20 can be round, oval, rectangular, or otherwise shaped depending on the desired flow pattern and overall spout chamber design.

Typically there are no internals in a secondary orifice but options do include adding internals to modulate the flow in such a manner as to promote the spout stability, spout circulation and spout annulus mass transfer. Each orifice 20 is laterally spaced from the spout nozzles 18 with the horizontal distance from the orifice to the spout nozzle opening best being about 0.2 cm or more. The secondary orifices best are located at an elevation higher than the spout nozzle surface and should be located at such a distance from the spout nozzle that the jet produced by the secondary orifice affects the shape of the spout and/or spout circulation. In some instances it is useful to locate at least one secondary orifice to inject a halogen-containing gas to keep the vessel wall etched in the region of a spout. The best placement will depend on the desired flow pattern and overall spout chamber design.

FIGS. 4-6 show a common open plenum 66 for gas delivery to the set of secondary orifices 20 surrounding the spout nozzle 18. Other options include, but are not limited to, adding internals to the secondary plenum to provide swirling action to stabilize spout or increase mass transfer between spout and annulus. Another option is to add plenum internals to secure an even distribution to each orifice, including the option of eliminating the plenum and use of separate flow control to each orifice 20.

The shape of the spout chamber 14 best is selected to promote a good continuous particle flow in the annulus 28. It is desirable to have a continuous dense particulate downward flow along the annulus surrounding the upward spout flow. If the particles have a tendency to agglomerate it may be important to avoid having stagnant areas.

Particles should be guided towards the spout nozzle for re-entrainment into the spout. FIGS. 4A and 4B depict two, of many, solutions to this issue. A steep elliptic shape as in FIG. 4A secures a smooth flow along the annular walls 16a and all the way back to the nozzle 18a. A conical bottom shape with angles, as shown in FIGS. 6A and 6B, can achieve the same type of flow; however, abrupt angles might create zones that would harbor stagnant particles. In a spout chamber it is best to maintain a safe distance from the spout to the reactor walls because the spout will have a high concentration of silicon containing gas so if it comes near a heated reactor wall it could cause excess deposition. Thus in addition to promoting a smooth particle flow it is best to keep some distance from wall to spout. This is the reason why a less steep or even flat surface is recommended near the spout nozzle at the bottom of the chamber. The extreme case of a conical bottom is when cone angle γ is 0°. This is called a flat bottom spout chamber, an example of which appears in FIG. 4B. Another approach is to provide a bottom with multiple cones of increasing steepness. It can be useful to design the spout chamber so that flow is maintained while avoiding possible regions of high impact or high velocity where particles could cause excess erosion. A protruded nozzle 18b as illustrated in FIG. 6A would also increase the distance to walls and reduce the risk of wall deposition.

Other considerations can be taken, including choice of materials, to avoid areas where halogen-containing gas could accumulate and possibly promote corrosion. If the spout chamber diameter is too wide there could be a stagnant layer of particles near the wall 16 which will reduce heat transfer and could even cause agglomeration and eventually dendrite formation. The exact dimensions will depend on the desired spout size and flow rates and can be estimated by one familiar with spouted beds from correlations in the spouted bed literature and experiments. When diameter needs to be wide to avoid contact with silicon-bearing gas the movement can also be induced by additional secondary gas to fluidize the annulus.

As shown in FIGS. 1-3, near the spout 12 can be a product outlet 22 located near the bottom of the spout chamber to secure preferential withdrawal of larger particles segregating in the spout chamber. Care should be taken so that the product withdrawal does not upset the spout particle motion. A small upward flow can be introduced to the product outlet 22 from a withdrawal gas entry port 27 to minimize the amount of dust leaving with product. It is best for the flow to be sufficient for de-dusting while low enough to not interfere with the spout circulation. The outlet 22 can be a common shared outlet to the three lobes of the spout chamber 14. In this case care should be taken in design of the spout chamber and outlet to minimize the effect from the outlet and shared sections. There are no additional inserts or ports in the spouted chamber to minimize the impact on the circulation and spout stability.

Heat can be added to the reactor in many ways, for example as described in U.S. Pat. No. 5,810,934. The primary modes of heating are to preheat gases injected through the spout nozzles and/or secondary orifices and to heat the reactor walls 50 with wall heaters 52 as illustrated in FIG. 1. These heaters 52 can be located all along the reactor, but best are located only along the walls where there is a large density of well mixed particles (regions I-III) because the heat transfer efficiency is highest here, but this is not a limitation. Hot gases could also be added through the additional ports 44 in the fluidized bed region. The reactor should be surrounded by insulation 54 to minimize heat losses. Insulation 54 can be many of a wide variety of materials.

Multiple spouts can be arranged in many different ways within two main categories, open or closed configuration. FIGS. 1-3 depict an open configuration design with a spout chamber 14 having three identical lobes concentric around a shared central bottom outlet 22. Each lobe is distinctly shaped to promote spout/annulus particle movement in the circumference of the spout nozzle while a portion of the circumference is open to the central outlet shared with the other chambers. Because the chambers 14 are open to the central outlet 22 they share a downward flowing annulus portion 29 in the center of the vessel. Each spout 12 is distinct and is best controlled with separate gas flow. Although there may be some mixing of particles between the individual spouts 12, this will not cause spout instability because they are spaced apart according to multiple spouted bed design criteria. To minimize the effect of one spout on the other, the distance from nozzle center line to nozzle center line should not be less than about 10 cm and in the case of a large commercial reactor it is best to maintain the density of orifices below 50 spouts per m². FIG. 2 illustrates the independent spout flow pattern in one of the lobes. This open design is not limited to the three-lobe spout chamber shown but there could be some practical limitations to maintaining many more individual lobes with a reasonable production control. One or more secondary orifices 20 may be provided for each spout nozzle. When more than one secondary orifice 20 is provided, the secondary orifices are spaced to surround the spout nozzle 18. An additional benefit to the open configuration is the effect of interaction between the shared annular zones that can increase attrition and thus increase the degree of self-seeding.

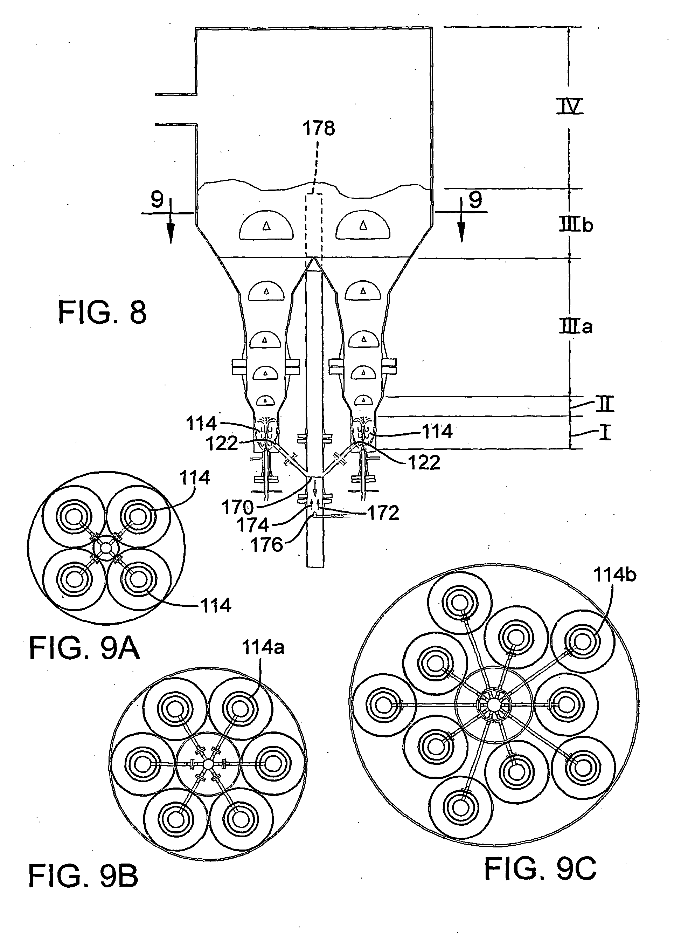

Closed configurations, best depicted in FIGS. 8 and 9, have two or more separate spout chambers. Each illustrated spout chamber 114, 114a, 114b, 114c is completely separated from the others. In the illustrated system, each spout chamber contains one spout, but two or more spouts could be contained in a spout chamber in another embodiment. Each spout chamber may have its own product outlet 122 adjacent to the spout nozzle feeding to a common outlet 170. The system could also be designed with separate transition regions (II) and/or fluidized bed regions (IIIa) releasing to a common fluidized bed region (IIIb). The illustrated dimensions of the transition zones are only examples and other heights or shapes are possible. The common product outlet header 172 could have a strong counter-current gas flow 174 from the withdrawal gas injector nozzle 176 to blow all undersize particles back into the reactor freeboard and main fluidized bed through a vertical, or near vertical, port 178. This port 178 could also be used to secure a maximum bed height of the main fluidized bed through overflow. FIGS. 9A, 9B and 9C illustrate, for three example configurations, how multiple spout chambers with transition regions could be connected to a common fluidized bed. The various illustrated systems are mere examples and do not limit or exclude other configurations.

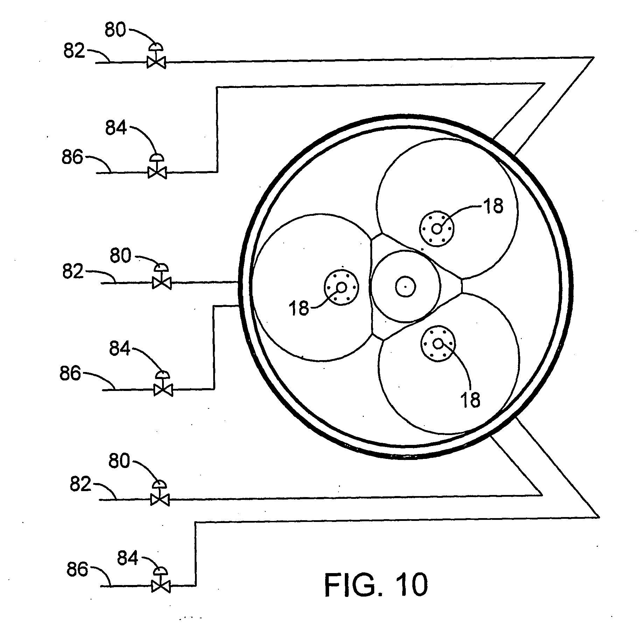

A reactor may have a separate control for the gas flow to each spout chamber, to allow a complete control of the spout stability. FIG. 10 illustrates such a possible flow control system for the open configuration reactor depicted in FIGS. 1-3. For example, a preheated mix of silicon-bearing gas, halogen-containing gas, and inert gas can be introduced to each spout nozzle 18 using a separate flow control 80 on each gas source feed line 82 to ensure adequate and stable flow to each nozzle 18. It is further possible to separately control the flow of each gas to each nozzle and even the temperature. A benefit of such a configuration is that if any pressure or flow anomalies are observed at any of the spouts, the silicon-bearing gas and halogen-containing gas could be shut off while maintaining the inert gas well within the spouting velocities. An open design such as in FIG. 1-3 would benefit most from such a gas flow control arrangement because the continuation of spouts on all three nozzles would help maintain the optimal flow patterns. A closed design like FIG. 8 would be more forgiving and could tolerate a complete shutdown of spouts that do not perform well. A separate flow control 84 on each secondary gas supply feed line 86 can be used to secure adequate and stable flow of gas to each secondary orifice. Pressure or flow anomalies in the secondary flow could also warrant a stopping of silicon-bearing gas or halogen-containing gas to that spout chamber. As mentioned earlier it is optional to also control each independent secondary orifice although typically it would be sufficient only to control, for each spout chamber, the total flow to the set of orifices within that spout chamber.

Other aspects of independent gas feed control are also useful. Temperature can be controlled by control of the gas introduced through the secondary orifices 20, usually a preheated mix of halogen-containing gas and inert gas. Or cooled gas can be injected through the secondary orifices when appropriate. A gas, such as an inert gas, particularly argon, nitrogen, or a mixture thereof, can be injected through the secondary orifices to reduce the partial pressure of hydrogen within the reaction vessel. And, as previously mentioned, it is sometimes useful to selectively inject a halogen-containing gas through one or more secondary orifices to keep the vessel wall etched in the region of a spout.

### Example 1 - Effect of cooled nozzle on eliminating dendrite formation

The reactor system was an open configuration system with three spouts surrounding a common central outlet as illustrated in FIGS. 1-3. Each nozzle tip was water cooled to maintain a surface temperature not much above 100°C. Each spout nozzle was fed a mix of 600 slm hydrogen and 100 slm silane preheated to 300°C. About 100 slm hydrogen preheated to 200°C was distributed to each set of six secondary orifices around the nozzles. The pressure in the freeboard region (IV) was controlled at 0.35 barg. The walls of the spout region were about 650°C while the wall temperatures of the fluidized bed region were well above 700°C. Measured bed temperature was about 690-700°C. After several days operation there was no sign of deposition at or near the primary nozzles.

When nozzle cooling was turned off, significant deposition would occur in only a few days at the same conditions.

### Example 2 - Effect of secondary as on protruding nozzles

The reactor system was an open configuration as in Example 1 but with no cooling of the nozzle tips. The nozzles protruded a few inches into the spouts, as illustrated in FIG. 4B.

Each spout nozzle was fed a mix of 600 slm hydrogen and 100 slm silane preheated to 150°C. No hydrogen was distributed to the six secondary orifices surrounding each spout nozzle. The pressure in the freeboard region (IV) was controlled at 0.35barg. The walls of the spout region (I) were heated above critical nucleation temperature but below Tamman temperature to minimize deposition while the wall temperatures of the fluidized bed region (III) are heated well above the Tamman temperature to promote scavenging and annealing of powder. Measured spout annulus temperature was 675°C, bed transition temperature was 690°C and fluidized bed temperature was 710°C. When production was stopped after only a few days operation there was significant deposition, 0.3 kg per nozzle, at the surface surrounding the nozzle and starting to grow onto the nozzle. This demonstrates the need for secondary gas to eliminate deposits.

When operating at the same conditions but with about 100 slm to each of the set of six secondary orifices surrounding each spout nozzle there were no sign of deposition at or near the nozzles after as much as 14 days of operation.

### Example 3 - Verification of spout penetration and individual spout behavior

The reactor system was similar to Examples 1 and 2 but with a transparent plexiglas column instead of the reactor. The primary nozzle diameter was 0.375" All flows were nitrogen at ambient temperature and pressure above bed was 0.2 atm.

The purpose of these tests was to verify spout penetration heights vs. literature correlations. The spout penetration flow was determined by increasing primary nozzle flow rate for a given particle size distribution and bed level. The flow at which spouts penetrated the bed would be the minimum flow for that spout height.

A first set of tests were with beads of average diameter 0.95 mm.
1) 50 kg beads charged to the reactor yielding a stationary bed height of 45 cm.
2) Total nitrogen flow to the three primary nozzles was varied between 1000 slm and 1700 slm while total nitrogen flow to secondary orifices was varied between 100 and 300 slm.
3) After completing the test at 45 cm, 17 kg was removed, dropping the stationary level to about 33 cm. The flow variations were repeated.
4) After completing the test at 45 cm, 13 kg was removed, dropping the stationary level to about 20 cm. The flow variations were repeated.

A second set of tests was with beads of average size about 0.5 mm.
1) 50 kg beads charged to the reactor yielding a stationary bed height of 45 cm.
2) Total nitrogen flow to the three primary nozzles was varied between 1000 slm and 1700 slm while total nitrogen flow to secondary orifices was varied between 100 and 300 slm.
3) After completing the test at 45 cm, 17 kg was removed, dropping the stationary level to about 33 cm. The flow variations were repeated.
4) After completing the test at 45 cm, 13 kg was removed, dropping the stationary level to about 20 cm. The flow variations were repeated.

**Table I - Correlated values vs, measured and observed results**

| | | | | | | |
|---|---|---|---|---|---|---|
| dprt (mm) | 0.85 | 0.85 | 0.85 | 0.44 | 0.44 | 0.44 |
| **Primary flow (slm)** | **1200** | **980** | **775** | **775** | **500** | **300** |
| Ujet (m/s) | 77 | 64.4 | 51.9 | 51.9 | 32 | 19.2 |
| **Ums correlated (m/s)** | | | | | | |
| Mathur & Gisler (1955) | 0.105 | 0.092 | 0.072 | 0.054 | 0.048 | 0.048 |
| Madonna & Lama (1958) | 0.094 | 0.082 | 0.065 | 0.094 | 0.082 | 0.082 |
| Ghosh (1956) | 0.000 | 0.000 | 0.000 | 0.000 | 0.000 | 0.000 |
| Chen & Lam (1985) | 0.001 | 0.001 | 0.001 | 0.001 | 0.001 | 0.001 |
| Fane & Mitchell (1984) | 0.119 | 0.104 | 0.082 | 0.062 | 0.054 | 0.054 |
| **Olazar (1994)** | **0.236** | **0.206** | **0.162** | 0.122 | 0.107 | 0.107 |
| Choi & Meisen (1992) | 0.211 | 0.161 | 0.099 | 0.141 | 0.108 | 0.108 |
| **Ums measured (m/s)** | **0.240** | **0.200** | **0.160** | **Minimum fluidization no Ums** | | |
| **Jet Ht correlated (inches)** | | | | | | |
| Merry (1975) | 4.7 | 4.4 | 4.0 | 4.7 | 3.9 | 3.1 |
| **Yang and Kearins (1978)** | **15.0** | **12.5** | **10.0** | **10.0** | **6.3** | **3.7** |
| Knowlton et. Al. (1908) | 5.9 | 5.3 | 4.5 | 5.5 | 3.9 | 2.9 |
| Blake (1996) | 4.4 | 4.1 | 3.7 | 3.7 | 3.1 | 2.5 |
| **Bed Level measured** | **17.000** | **13.000** | **8.000** | **13.000** | **8.000.** | **8.000** |

The measured spout penetration flow at each bed level is shown in Table I together with several correlated values from literature. The main observations were:
- With beads of 0.95 mm the system behaves like a well spouted bed with clear spouts at all three nozzles. The spout height and flow matches correlations for large scale systems.
- With smaller granules there was practically no spouting but the bed was well fluidized. This agrees with the correlation that orifice diameter needs to be less than 25 times larger than average particle diameter for proper spouting. In this case the nozzle was about 20 times larger than the average particle size so spouts would be very small if existing.
- There is a significant effect of the secondary flow. Increased secondary flow widens the spout and slows down the spout velocity by increasing the amounts solids in the spout. This effect was more pronounced with the larger particles when spouting was more prevalent.

Although various embodiments are disclosed herein, many adaptations and modifications may be made within the scope of the invention in accord with the common general knowledge of those skilled in this art. Such modifications include the substitution of known equivalents for any aspect of the invention in order to achieve the same result in substantially the same way.

## Claims

1. A heated silicon deposition reactor system comprising:
a plurality of silicon particles;
a vessel having a wall that defines a chamber that contains the particles;
at least one spout nozzle having an opening positioned to inject a silicon-bearing gas upwardly into the chamber to circulate the particles in a submerged spout; and
at least one secondary orifice laterally spaced from the spout nozzle and positioned to inject gas into the chamber as a jet that extends upwardly alongside or toward the spout.

2. The reactor system of claim 1 comprising plural secondary orifices spaced around each spout nozzle.

3. The reactor system of any one of claims 1-2 wherein at least one secondary orifice is positioned to inject gas upwardly into the chamber as a jet that extends substantially vertically.

4. The reactor system of any one of claims 1-3 wherein at least one secondary orifice is positioned to inject gas upwardly into the chamber as a jet that extends at an angle from 15° to 165° with respect to horizontal, 90° being parallel to the nozzle centerline.

5. The reactor system of any one of claims 1-4 wherein at least one secondary orifice is positioned to inject gas upwardly into the chamber as a jet that extends in the horizontal direction at an angle from 0° to 180° with respect to the line between orifice centerline and the centerline of the spout produced by the spout nozzle, 0° being the line itself.

6. The reactor system of any one of claims 1-5 wherein at least one secondary orifice is positioned to inject gas as a jet at a location where the jet affects the shape of the spout.

7. The reactor system of any one of claims 1-6 comprising:
at least two spout nozzles; and
a flow controller connected to each spout nozzle and operable to separately control the flow of gas through each spout nozzle.

8. The reactor system of any one of claims 1-7 comprising:
a set of at least two secondary orifices adjacent to the spout nozzle; and
a flow controller connected to one or more of the secondary orifices surrounding the spout nozzle and operable to separately control the flow of gas to one or more of the secondary orifices.

9. The reactor system of any one of claims 1-8 wherein at least one secondary orifice is located horizontally no closer than 0.2 cm from the perimeter of the spout nozzle and sufficiently close to the spout nozzle to affect the spout.

10. The reactor system of any one of claims 1-9 wherein the chamber is configured to have at least two regions including:
at least one spout chamber that contains the at least one spout nozzle and submerged spout; and
an upper bed region that communicates with and is located above the at least one spout chamber to receive gas moving upwardly from the at least one spout chamber.

11. The reactor system of claim 10 wherein at least one spout nozzle has a tip that is located above the bottom of the chamber and below the upper bed region.

12. A heated silicon deposition reactor system comprising:
a plurality silicon particles;
a vessel having a wall that defines a chamber that contains the particles; and
at least two spaced-apart spout nozzles, each positioned to inject a silicon-bearing gas upwardly into the chamber to circulate particles around the nozzle in a submerged spout.

13. The reactor system of claim 12 further comprising a flow controller connected to each spout nozzle and operable to separately control the flow of gas through each spout nozzle.

14. The reactor system of any one of claims 12-13 comprising at least three spaced-apart spout nozzles, each having the opening positioned to inject a gas upwardly into the chamber to circulate particles around the nozzle in a submerged spout, the spout nozzles being positioned such that the centerline of each of the spout nozzles is substantially equally distant horizontally from the centerline of the closest two other spout nozzles.

15. The reactor system of any one of claims 12-14 wherein:
the minimum horizontal distance between spout nozzles is 10 cm; and
the horizontal spacing of the spout nozzles is such that the number of spout nozzles per square meter is not more than fifty.

16. The reactor system of any one of claims 12-15 wherein the chamber is configured to have at least two regions including:
one or more spout chambers that contains the spout nozzles and submerged spouts; and
an upper bed region that communicates with and is located above the one or more spout chambers to receive gas moving upwardly from the one or more spout chambers.

17. The reactor system of claim 16 wherein at least one secondary orifice is laterally spaced from at least one of the spout nozzles and positioned to inject gas into the chamber as a jet that extends upwardly alongside or toward the spout.

18. The reactor system of claim 16 wherein the wall defines at least two separate spout chambers, each of which contains at least one of the spout nozzles.

19. The reactor system of claim 18 wherein each spout chamber contains a single spout nozzle.

20. The reactor system of claim 18 wherein each spout chamber contains at least two spout nozzles.

21. The reactor system of any one of claims 16-20 wherein:
at least a portion of the upper bed region is sized and shaped to contain beads in a bubbling fluidized bed; and
the reactor system further comprises a gas source that supplies a total flow of gas into the vessel sufficient to fluidize the particles in the portion of the upper bed region that is sized and shaped to contain particles in the bubbling fluidized bed.

22. The reactor system of claim 16 wherein the wall defines a single spout chamber that contains all of the spout nozzles.

23. The reactor system of claim 22 wherein the spout chamber contains three spout nozzles.

24. The reactor system of any one of claims 1-23 wherein the spout nozzle has a tip that is located above the bottom of the chamber and below the upper bed region.

25. A process for the deposition of silicon on particles inside a vessel, the process comprising:
injecting a silicon-bearing gas upwardly through a spout nozzle into a chamber containing silicon particles to provide a spout in the chamber and to maintain particles in a submerged spouted bed;
maintaining the particles at a temperature sufficient to cause silicon to deposit from the silicon-bearing gas onto particles; and
injecting a gas through at least one secondary orifice that is laterally spaced from the spout nozzle and that has an orifice positioned to inject gas into the chamber as a jet that extends upwardly alongside, toward, or away from the spout.

26. The process of claim 25 further comprising regulating and directing the flow of gas through the at least one secondary orifice to produce at least one jet that affects the shape of the spout.

27. The process of one of claims 25-26 further comprising regulating and directing the flow of gas through the at least one secondary orifice to produce at least one jet that inhibits the growth of silicon deposits.

28. The process of any one of claims 25-27 further comprising heating the gas before injecting through the at least one secondary orifice.

29. The process of any one of claims 25-28 further comprising cooling the gas before injecting through the at least one secondary orifice.

30. The process of any one of claims 25-29 wherein the gas injected through the at least one secondary orifice comprises a gas suitable to reduce the partial pressure of hydrogen in the vessel.

31. The process of any one of claims 25-30 wherein the gas injected through the at least one secondary orifice comprises argon, nitrogen, or a mixture thereof.

32. The process of any one of claims 25-31 further comprising injecting a halogen-containing gas through the at least one secondary orifice to keep the vessel wall etched in the region of the spout.

33. The process of any one of claims 25-32 further comprising injecting a reactive substance through the at least one secondary orifice to heat the region of the spout by energy released from an exothermic reaction of the reactive substance at the region of the spout, the amount of energy produced by the reaction being sufficient to heat the particles in the spout.

34. The process of any one of claims 25-33 further comprising maintaining a sufficient total flow of gas through nozzles and orifices to fluidize particles above spout in the bubbling fluidized bed.

35. A process for the deposition of silicon on particles inside a vessel, the process comprising:
injecting a silicon-bearing gas upwardly through at least two spout nozzles into a chamber containing silicon particles to provide at least two submerged spouts in the chamber; and
maintaining the particles at a temperature sufficient to cause silicon to deposit from the silicon-bearing gas onto particles.

36. The process of claim 35 further comprising injecting a gas through at least one secondary orifice that is laterally spaced from at least one of the spout nozzles and that has an orifice positioned to inject gas into the chamber as a jet that extends upwardly alongside, toward, or away from the spout.

37. The process of any one of claims 35-36 further comprising regulating and directing the flow of gas through the at least one secondary orifice to produce at least one jet that affects the shape of the spout.

38. The process of any one of claims 35-37 further comprising regulating and directing the flow of gas through the at least one secondary orifice to produce at least one jet that inhibits the growth of silicon deposits.

39. The process of any one of claims 35-38 further comprising heating the gas before injecting through the at least one secondary orifice.

40. The process of any one of claims 35-39 further comprising cooling the gas before injecting through the at least one secondary orifice.

41. The process of any one of claims 35-40 wherein the gas injected through the at least one secondary orifice comprises a gas suitable to reduce the partial pressure of hydrogen in the vessel.

42. The process of any one of claims 35-41 wherein the gas injected through the at least one secondary orifice comprises argon, nitrogen, or a mixture thereof.

43. The process of any one of claims 35-42 further comprising injecting a halogen-containing gas through the at least one secondary orifice to keep the vessel wall etched in the region of the spout.

44. The process of any one of claims 35-43 further comprising injecting a reactive substance through the at least one secondary orifice to heat the region of the spout by energy released from an exothermic reaction of the reactive substance at the region of the spout, the amount of energy produced by the reaction being sufficient to heat the particles in the spout.

45. The process of any one of claims 35-44 further comprising maintaining a sufficient total flow of gas through nozzles and orifices to fluidize particles above spout in the bubbling fluidized bed.

## Patentansprüche

1. Reaktorsystem zur Deposition von erhitztem Silizium, mit:
einer Mehrzahl von Siliziumpartikeln;
einem Gefäß mit einer Wand, wodurch eine Kammer definiert wird, die die Partikel enthält;
mindestens einer Strahldüse mit einer Öffnung, die positioniert ist, um ein Silizium enthaltendes Gas nach oben gerichtet in die Kammer zu spritzen, um die Partikel in einem eingetauchten Strahl zu zirkulieren; und
mindestens einem sekundären Loch, das von der Strahldüse seitlich beabstandet und positioniert ist, um in die Kammer Gas zu spritzen, und zwar als eine Strömung, die entlang oder in Richtung des Strahls nach oben verläuft.

2. Reaktorsystem nach Anspruch 1, mit mehreren sekundären Löchern, die um jede Strahldüse herum beabstandet sind.

3. Reaktorsystem nach einem der Ansprüche 1-2, bei dem mindestens ein sekundäres Loch positioniert ist, um in die Kammer nach oben gerichtet Gas zu spritzen, und zwar als eine Strömung, die im Wesentlichen vertikal verläuft.

4. Reaktorsystem nach einem der Ansprüche 1-3, bei dem mindestens ein sekundäres Loch positioniert ist, um in die Kammer nach oben gerichtet Gas zu spritzen, und zwar als eine Strömung, die mit einem Winkel von 15° bis 165° zur Horizontalen verläuft, wobei 90° parallel zur Mittellinie der Düse ist.

5. Reaktorsystem nach einem der Ansprüche 1-4, bei dem mindestens ein sekundäres Loch positioniert ist, um in die Kammer nach oben gerichtet Gas zu spritzen, und zwar als eine Strömung, die in der horizontalen Richtung mit einem Winkel von 0° bis 180° zu der Linie zwischen der Loch-Mittellinie des und der Mittellinie des Strahls verläuft, der durch die Strahldüse selbst erzeugt wird, wobei 0° die Linie selbst ist.

6. Reaktorsystem nach einem der Ansprüche 1-5, bei dem mindestens ein sekundäres Loch positioniert ist, um Gas als eine Strömung an einer Position einzuspritzen, wo die Strömung die Form des Strahls beeinflusst.

7. Reaktorsystem nach einem der Ansprüche 1-6, mit:
mindestens zwei Strahldüsen; und
einer Flusssteuerung, die mit jeder Strahldüse verbunden und steuerbar ist, um den Gasfluss durch jede Strahldüse separat zu steuern.

8. Reaktorsystem nach einem der Ansprüche 1-7, mit:
einem Satz von mindestens zwei sekundären Löchern benachbart zur Strahldüse; und
einer Flusssteuerung, die mit einem oder mehreren der sekundären Löcher, die die Strahldüse umgeben, verbunden und steuerbar ist, um den Gasfluss zu einem oder mehreren der sekundären Löcher separat zu steuern.

9. Reaktorsystem nach einem der Ansprüche 1-8, bei dem mindestens ein sekundäres Loch in horizontaler Richtung nicht näher als 0,2 cm vom Umfang der Strahldüse und ausreichend nahe zur Strahldüse positioniert ist, um den Strahl zu beeinflussen.

10. Reaktorsystem nach einem der Ansprüche 1-9, bei dem die Kammer konfiguriert ist, um mindestens zwei Regionen zu beinhalten, einschließlich:
mindestens einer Strahlkammer, die die mindestens eine Strahldüse und den eingetauchten Strahl beinhaltet; und
einer oberen Bettregion, die mit der mindestens einen Strahlkammer in Verbindung steht und über dieser angeordnet ist, um Gas zu empfangen, das sich von der mindestens einen Strahlkammer nach oben bewegt.

11. Reaktorsystem nach Anspruch 10, bei dem mindestens eine Strahldüse eine Spitze hat, die über dem Boden der Kammer und unter der oberen Bettregion angeordnet ist.

12. Reaktorsystem zur Deposition von erhitztem Silizium, mit:
einer Mehrzahl von Siliziumpartikeln;
einem Behältnis mit einer Wand, wodurch eine Kammer definiert wird, die die Partikel enthält; und
mindestens zwei beabstandeten Strahldüsen, die jeweils positioniert sind, um ein Silizium enthaltendes Gas nach oben gerichtet in die Kammer zu spritzen, um Partikel um die Düse herum in einem eingetauchten Strahl zu zirkulieren.

13. Reaktorsystem nach Anspruch 12, außerdem mit einer Flusssteuerung, die mit jeder Strahldüse verbunden und steuerbar ist, um den Gasfluss durch jede Strahldüse separat zu steuern.

14. Reaktorsystem nach einem der Ansprüche 12-13, mit mindestens drei beabstandeten Strahldüsen, die jeweils eine Öffnung haben, die positioniert ist, um ein Gas nach oben gerichtet in die Kammer zu spritzen, um Partikel um die Düse herum in einem eingetauchten Strahl zu zirkulieren, wobei die Strahldüsen so positioniert sind, dass die Mittellinie von jeder der Strahldüsen horizontal zur Mittellinie der nächstgelegenen zwei anderen Strahldüsen im Wesentlichen gleichmäßig beabstandet ist.

15. Reaktorsystem nach einem der Ansprüche 12-14, bei dem:
die minimale horizontale Distanz zwischen Strahldüsen 10 cm beträgt; und
der horizontale Abstand der Strahldüsen so ist, dass die Anzahl von Strahldüsen pro Quadratmeter nicht mehr als fünfzig ist.

16. Reaktorsystem nach einem der Ansprüche 12-15, bei dem die Kammer konfiguriert ist, um mindestens zwei Regionen zu beinhalten, einschließlich:
einer oder mehrerer Strahlkammern, die die Strahldüsen und eingetauchten Düsen enthält; und
einer oberen Bettregion, die mit der einen oder den mehreren Strahlkammern in Verbindung steht und über dieser angeordnet ist, um Gas zu empfangen, das sich von der einen oder mehreren Strahlkammern nach oben bewegt.

17. Reaktorsystem nach Anspruch 16, bei dem mindestens ein sekundäres Loch seitlich beabstandet von mindestens einer der Strahldüsen vorgesehen und positioniert ist, um in die Kammer Gas zu spritzen, und zwar als eine Strömung, die entlang oder in Richtung des Strahls nach oben verläuft.

18. Reaktorsystem nach Anspruch 16, bei dem die Wand mindestens zwei separate Strahlkammern definiert, von denen jede mindestens eine der Strahldüsen enthält.

19. Reaktorsystem nach Anspruch 18, bei dem jede Strahlkammer eine einzelne Strahldüse enthält.

20. Reaktorsystem nach Anspruch 18, bei dem jede Strahlkammer mindestens zwei Strahldüsen enthält.

21. Reaktorsystem nach einem der Ansprüche 16-20, bei dem:
mindestens ein Bereich der oberen Bettregion bemessen und geformt ist, um Perlen in einem sprudelnden Wirbelbett zu enthalten; und
das Reaktorsystem außerdem eine Gasquelle aufweist, die einen Gesamt-Gasfluss in das Gefäß liefert, der ausreichend ist, um die Partikel in dem Bereich der oberen Bettregion zu fluidisieren, der bemessen und geformt ist, um Partikel in dem sprudelnden Wirbelbett aufzunehmen.

22. Reaktorsystem nach Anspruch 16, bei dem die Wand eine einzelne Strahlkammer definiert, die alle der Strahldüsen enthält.

23. Reaktorsystem nach Anspruch 22, bei dem die Strahlkammer drei Strahldüsen enthält.

24. Reaktorsystem nach einem der Ansprüche 1-23, bei dem die Strahldüse eine Spitze hat, die über dem Boden der Kammer und unter der oberen Bettregion angeordnet ist.

25. Verfahren zur Deposition von Silizium auf Partikeln innerhalb eines Gefäßes, wobei das Verfahren umfasst:
Einspritzen eines Silizium enthaltenden Gases durch eine Strahldüse nach oben gerichtet in eine Kammer, die Siliziumpartikel enthält, um in der Kammer einen Strahl zur Verfügung zu stellen und um Partikel in einem Bett mit einem eingetauchten Strahl beizubehalten;
Aufrechterhalten einer Temperatur der Partikel, die ausreichend ist, um zu bewirken, dass sich Silizium von dem Silizium enthaltenden Gas auf Partikeln absetzt; und
Einspritzen eines Gases durch mindestens ein sekundäres Loch, das von der Spritzdüse seitlich beabstandet ist und das ein Loch aufweist, das positioniert ist, um in die Kammer Gas zu spritzen, und zwar als eine Strömung, die entlang, in Richtung auf oder weg von dem Strahl nach oben verläuft.

26. Verfahren nach Anspruch 25, außerdem mit dem Steuern und Lenken des Gasflusses durch das mindestens eine sekundäre Loch, um mindestens eine Strömung zu erzeugen, die die Form des Strahls beeinflusst.

27. Verfahren nach einem der Ansprüche 25-26, außerdem mit dem Steuern und Lenken des Gasflusses durch das mindestens eine sekundäre Loch, um mindestens eine Strömung zu erzeugen, die das Wachstum von Siliziumablagerungen behindert.

28. Verfahren nach einem der Ansprüche 25-27, außerdem mit dem Erhitzen des Gases vor dem Einspritzen durch das mindestens eine sekundäre Loch.

29. Verfahren nach einem der Ansprüche 25-28, außerdem mit dem Abkühlen des Gases vor dem Einspritzen durch das mindestens eine sekundäre Loch.

30. Verfahren nach einem der Ansprüche 25-29, bei dem das Gas, das durch das mindestens eine sekundäre Loch gespritzt wird, ein Gas beinhaltet, das geeignet ist, um den Partialdruck von Wasserstoff in dem Gefäß zu reduzieren.

31. Verfahren nach einem der Ansprüche 25-30, bei dem das Gas, das durch das mindestens eine sekundäre Loch gespritzt wird, Argon, Stickstoff oder eine Mischung daraus enthält.

32. Verfahren nach einem der Ansprüche 25-31, außerdem mit dem Einspritzen eines Halogen enthaltenden Gases durch das mindestens eine sekundäre Loch, um die Gefäßwand in der Region des Strahls geätzt zu halten.

33. Verfahren nach einem der Ansprüche 25-32, außerdem mit dem Einspritzen einer reaktiven Substanz durch das mindestens eine sekundäre Loch, um die Region des Strahls durch Energie zu erhitzen, die durch eine exotherme Reaktion der reaktiven Substanz in der Region des Strahls freigesetzt wird, wobei die Menge an Energie, die durch die Reaktion erzeugt wird, ausreichend ist, um die Partikel in dem Strahl zu erhitzen.

34. Verfahren nach einem der Ansprüche 25-33, außerdem mit dem Aufrechterhalten eines ausreichenden Gesamt-Gasflusses durch die Düsen und Löcher, um Partikel über dem Strahl in dem sprudelnden Wirbelbett zu fluidisieren.

35. Verfahren zur Deposition von Silizium auf Partikeln innerhalb eines Gefäßes, wobei das Verfahren umfasst:
Einspritzen eines Silizium enthaltenden Gases durch mindestens zwei Strahldüsen nach oben gerichtet in eine Kammer, die Siliziumpartikel enthält, um in der Kammer mindestens zwei eingetauchte Strahlen zur Verfügung zu stellen; und
Aufrechterhalten einer Temperatur der Partikel, die ausreichend ist, um die bewirken, dass sich Silizium von dem Silikon enthaltenden Gas auf Partikel absetzt.

36. Verfahren nach Anspruch 35, außerdem mit dem Einspritzen eines Gases durch mindestens ein sekundäres Loch, das von mindestens einer der Strahldüsen seitlich beabstandet ist und das ein Loch aufweist, das positioniert ist, um in die Kammer Gas zu spritzen, und zwar als eine Strömung, die entlang, in Richtung auf oder weg von dem Strahl nach oben verläuft.

37. Verfahren nach einem der Ansprüche 35-36, außerdem mit dem Steuern und Lenken des Gasflusses durch das mindestens eine sekundäre Loch, um mindestens eine Strömung zu erzeugen, die die Form des Strahls beeinflusst.

38. Verfahren nach einem der Ansprüche 35-37, außerdem mit dem Steuern und Lenken des Gasflusses durch das mindestens eine sekundäre Loch, um mindestens eine Strömung zu erzeugen, die das Wachstum von Siliziumablagerungen behindert.

39. Verfahren nach einem der Ansprüche 35-38, außerdem mit dem Erhitzen des Gases vor dem Einspritzen durch das mindestens eine sekundäre Loch.

40. Verfahren nach einem der Ansprüche 35-39, außerdem mit dem Abkühlen des Gases vor dem Einspritzen durch das mindestens eine sekundäre Loch.

41. Verfahren nach einem der Ansprüche 35-40, bei dem das Gas, das durch das mindestens eine sekundäre Loch gespritzt wird, ein Gas enthält, das geeignet ist, um den Partialdruck von Wasserstoff in dem Gefäß zu reduzieren.

42. Verfahren nach einem der Ansprüche 35-41, bei dem das Gas, das durch das mindestens eine sekundäre Loch gespritzt wird, Argon, Stickstoff oder eine Mischung daraus enthält.

43. Verfahren nach einem der Ansprüche 35-42, außerdem mit dem Einspritzen eines Halogen enthaltenden Gases durch das mindestens eine sekundäre Loch, um die Gefäßwand in der Region des Strahls geätzt zu halten.

44. Verfahren nach einem der Ansprüche 35-43, außerdem mit dem Einspritzen einer reaktiven Substanz durch das mindestens eine sekundäre Loch, um die Region des Strahls durch Energie zu erhitzen, die durch eine exotherme Reaktion der reaktiven Substanz in der Region des Strahls freigesetzt wird, wobei die Menge an Energie, die durch die Reaktion erzeugt wird, ausreichend ist, um die Partikeln in dem Strahl zu erhitzen.

45. Verfahren nach einem der Ansprüche 35-44, außerdem mit dem Aufrechterhalten eines ausreichenden Gesamt-Gasflusses durch Düsen und Löcher, um Partikel über dem Strahl in dem sprudelnden Wirbelbett zu fluidisieren.

## Revendications

1. Système de réacteur chauffé pour dépôt de silicium, comprenant :
- une pluralité de particules de silicium ;
- un récipient ayant une paroi qui définit une chambre qui contient les particules ;
- au moins une buse de giclage ayant une ouverture positionnée pour injecter un gaz contenant du silicium vers le haut dans la chambre pour faire circuler les particules dans un giclage submergé ; et
- au moins un orifice secondaire espacé latéralement de la buse de giclage et positionné pour injecter du gaz dans la chambre sous la forme d'un jet qui s'étend vers le haut le long du ou vers le giclage.

2. Système de réacteur selon la revendication 1, comprenant plusieurs orifices secondaires espacés autour de chaque buse de giclage.

3. Système de réacteur selon l'une quelconque des revendications 1 et 2, dans lequel au moins un orifice secondaire est positionné pour injecter un gaz vers le haut dans la chambre sous la forme d'un jet qui s'étend sensiblement verticalement.

4. Système de réacteur selon l'une quelconque des revendications 1 à 3, dans lequel au moins un orifice secondaire est positionné pour injecter du gaz vers le haut dans la chambre sous la forme d'un jet qui s'étend suivant un angle de 15° à 165° par rapport à l'horizontale, 90° étant parallèle à la ligne centrale de la buse.

5. Système de réacteur selon l'une quelconque des revendications 1 à 4, dans lequel au moins un orifice secondaire est positionné pour injecter du gaz vers le haut dans la chambre sous la forme d'un jet qui s'étend dans la direction horizontale suivant un angle de 0° à 180° par rapport à la ligne entre la ligne centrale d'orifice et la ligne centrale du giclage obtenue par la buse de giclage, 0° étant la ligne elle-même.

6. Système de réacteur selon l'une quelconque des revendications 1 à 5, dans lequel au moins un orifice secondaire est positionné pour injecter du gaz sous la forme d'un jet à un emplacement où le jet affecte la forme du giclage.

7. Système de réacteur selon l'une quelconque des revendications 1 à 6, comprenant :
- au moins deux buses de giclage ; et
- un régulateur de débit relié à chaque buse de giclage et actionnable pour réguler séparément l'écoulement du gaz à travers chaque buse de giclage.

8. Système de réacteur selon l'une quelconque des revendications 1 à 7, comprenant :
- un ensemble d'au moins deux orifices secondaires adjacents à la buse de giclage ; et
- un régulateur de débit relié à un ou plusieurs des orifices secondaires entourant la buse de giclage et actionnable pour réguler séparément l'écoulement de gaz dans l'un ou plusieurs des orifices secondaires.

9. Système de réacteur selon l'une quelconque des revendications 1 à 8, dans lequel au moins un orifice secondaire est situé horizontalement pas plus près que 0,2 cm du périmètre de la buse de giclage et suffisamment près de la buse de giclage pour affecter le giclage.

10. Système de réacteur selon l'une quelconque des revendications 1 à 9, dans lequel la chambre est configurée pour avoir au moins deux régions comprenant :
- au moins une chambre de giclage qui contient la au moins une buse de giclage et le giclage submergé ; et
- une région de lit supérieure qui communique avec et est située au-dessus de la au moins une chambre de giclage pour recevoir du gaz se déplaçant vers le haut à partir de la au moins une chambre de giclage.

11. Système de réacteur selon la revendication 10, dans lequel au moins une buse de giclage a une extrémité qui est située au-dessus du fond de la chambre et au-dessous de la région de lit supérieure.

12. Système de réacteur chauffé pour dépôt de silicium, comprenant :
- une pluralité de particules de silicium ;
- un récipient ayant une paroi qui définit une chambre qui contient les particules ; et
- au moins deux buses de giclage espacées l'une de l'autre, chacune positionnée pour injecter un gaz contenant du silicium vers le haut dans la chambre pour faire circuler des particules autour de la buse dans un giclage submergé.

13. Système de réacteur selon la revendication 12, comprenant en outre un régulateur de débit relié à chaque buse de giclage et actionnable pour réguler séparément l'écoulement de gaz à travers chaque buse de giclage.

14. Système de réacteur selon l'une quelconque des revendications 12 et 13, comprenant au moins trois buses de giclage espacées les unes des autres, chacune ayant l'ouverture positionnée pour injecter un gaz vers le haut dans la chambre pour faire circuler des particules autour de la buse dans un giclage submergé, les buses de giclage étant positionnées de telle sorte que la ligne centrale de chacune des buses de giclage est distante de manière sensiblement égale horizontalement de la ligne centrale des deux autres buses de giclage les plus proches.

15. Système de réacteur selon l'une quelconque des revendications 12 à 14, dans lequel :
- la distance horizontale minimale entre des buses de giclage est de 10 cm ; et
- l'espacement horizontal des buses de giclage est tel que le nombre de buses de giclage par mètre carré est non supérieur à cinquante.

16. Système de réacteur selon l'une quelconque des revendications 12 à 15, dans lequel la chambre est configurée pour avoir au moins deux régions comprenant :
- une ou plusieurs chambres de giclage qui contiennent les buses de giclage et les giclages submergés ; et
- une région de lit supérieure qui communique avec et est située au-dessus de la au moins une chambre de giclage pour recevoir du gaz se déplaçant vers le haut à partir de la au moins une chambre de giclage.

17. Système de réacteur selon la revendication 16, dans lequel au moins un orifice secondaire est espacé latéralement d'au moins l'une des buses de giclage et positionné pour injecter un gaz dans la chambre sous la forme d'un jet qui s'étend vers le haut le long du ou vers le giclage.

18. Système de réacteur selon la revendication 16, dans lequel la paroi définit au moins deux chambres de giclage séparées, dont chacune contient au moins l'une des buses de giclage.

19. Système de réacteur selon la revendication 18, dans lequel chaque chambre de giclage contient une seule buse de giclage.

20. Système de réacteur selon la revendication 18, dans lequel chaque chambre de giclage contient au moins deux buses de giclage.

21. Système de réacteur selon l'une quelconque des revendications 16 à 20, dans lequel :
- au moins une partie de la région de lit supérieure est dimensionnée et configurée pour contenir des perles dans un lit fluidisé à bulles ; et
- le système de réacteur comprend en outre une source de gaz qui adresse un écoulement total de gaz dans le récipient suffisamment pour fluidifier les particules dans la partie de la région de lit supérieure qui est dimensionnée et configurée pour contenir des particules dans le lit fluidisé à bulles.

22. Système de réacteur selon la revendication 16, dans lequel la paroi définit une seule chambre de giclage qui contient la totalité des buses de giclage.

23. Système de réacteur selon la revendication 22, dans lequel la chambre de giclage contient trois buses de giclage.

24. Système de réacteur selon l'une quelconque des revendications 1 à 23, dans lequel la buse de giclage a une extrémité qui est située au-dessus du fond de la chambre et au-dessous de la région de lit supérieure.

25. Procédé de dépôt de silicium sur des particules à l'intérieur d'un récipient, le procédé comprenant:
- l'injection d'un gaz contenant du silicium vers le haut à travers une buse de giclage dans une chambre contenant des particules de silicium pour former un giclage dans la chambre et pour maintenir des particules dans un lit submergé avec giclage ;
- le maintien des particules à une température suffisante pour amener du silicium à se déposer sur les particules à partir du gaz contenant du silicium ; et
- l'injection d'un gaz à travers au moins un orifice secondaire qui est latéralement espacé de la buse de giclage et qui a un orifice positionné pour injecter du gaz dans la chambre sous la forme d'un jet qui s'étend vers le haut, le long de, vers ou à l'opposé du giclage.

26. Procédé selon la revendication 25, comprenant en outre la régulation et l'orientation de l'écoulement de gaz à travers le au moins un orifice secondaire pour produire au moins un jet qui affecte la forme du giclage.

27. Procédé selon l'une quelconque des revendications 25 et 26, comprenant en outre la régulation et l'orientation de l'écoulement de gaz à travers le au moins un orifice secondaire pour produire au moins un jet qui inhibe la croissance de dépôts de silicium.

28. Procédé selon l'une quelconque des revendications 25 à 27, comprenant en outre le chauffage du gaz avant l'injection à travers le au moins un orifice secondaire.

29. Procédé selon l'une quelconque des revendications 25 à 28, comprenant en outre le refroidissement du gaz avant l'injection à travers le au moins un orifice secondaire.

30. Procédé selon l'une quelconque des revendications 25 à 29, dans lequel le gaz injecté à travers le au moins un orifice secondaire comprend un gaz approprié pour réduire la pression partielle d'hydrogène dans le récipient.

31. Procédé selon l'une quelconque des revendications 25 à 30, dans lequel le gaz injecté à travers le au moins un orifice secondaire comprend de l'argon, de l'azote ou un mélange de ceux-ci.

32. Procédé selon l'une quelconque des revendications 25 à 31, comprenant en outre l'injection d'un gaz à teneur en halogène à travers le au moins un orifice secondaire pour maintenir la paroi de récipient attaquée dans la région du giclage.

33. Procédé selon l'une quelconque des revendications 25 à 32, comprenant en outre l'injection d'une substance réactive à travers le au moins un orifice secondaire pour chauffer la région du giclage par l'énergie libérée par une réaction exothermique de la substance réactive dans la région du giclage, la quantité d'énergie produite par la réaction étant suffisante pour chauffer les particules dans le giclage.

34. Procédé selon l'une quelconque des revendications 25 à 33, comprenant en outre le maintien d'un écoulement total suffisant de gaz à travers les buses et les orifices pour fluidifier les particules au-dessus du giclage dans le lit fluidisé à bulles.

35. Procédé de dépôt de silicium sur des particules à l'intérieur d'un récipient, le procédé comprenant :
- l'injection d'un gaz contenant du silicium vers le haut à travers au moins deux buses de giclage dans une chambre contenant des particules de silicium pour former au moins deux giclages submergés dans la chambre ; et
- le maintien des particules à une température suffisante pour amener du silicium à se déposer sur les particules à partir du gaz contenant du silicium.

36. Procédé selon la revendication 35, comprenant en outre l'injection d'un gaz à travers au moins un orifice secondaire qui est latéralement espacé d'au moins l'une des buses de giclage et qui a un orifice positionné pour injecter du gaz dans la chambre sous la forme d'un jet qui s'étend vers le haut le long de, vers ou à l'opposé du giclage.

37. Procédé selon l'une quelconque des revendications 35 et 36, comprenant en outre la régulation et l'orientation de l'écoulement du gaz à travers le au moins un orifice secondaire pour produire au moins un jet qui affecte la forme du giclage.

38. Procédé selon l'une quelconque des revendications 35 à 37, comprenant en outre la régulation et l'orientation de l'écoulement de gaz à travers le au moins un orifice secondaire pour produire au moins un jet qui inhibe la croissance de dépôts de silicium.

39. Procédé selon l'une quelconque des revendications 35 à 38, comprenant en outre le chauffage du gaz avant l'injection à travers le au moins un orifice secondaire.

40. Procédé selon l'une quelconque des revendications 35 à 39, comprenant en outre le refroidissement du gaz avant l'injection à travers le au moins un orifice secondaire.

41. Procédé selon l'une quelconque des revendications 35 à 40, dans lequel le gaz injecté à travers le au moins un orifice secondaire comprend un gaz approprié pour réduire la pression partielle d'hydrogène dans le récipient.

42. Procédé selon l'une quelconque des revendications 35 à 41, dans lequel le gaz injecté à travers le au moins un orifice secondaire comprend l'argon, l'azote ou un mélange de ceux-ci.

43. Procédé selon l'une quelconque des revendications 35 à 42, comprenant en outre l'injection d'un gaz contenant un halogène à travers le au moins un orifice secondaire pour maintenir la paroi du récipient attaquée dans la région du giclage.

44. Procédé selon l'une quelconque des revendications 35 à 43, comprenant en outre l'injection d'une substance réactive à travers le au moins un orifice secondaire pour chauffer la région du giclage par l'énergie libérée par une réaction exothermique de la substance réactive dans la région du giclage, la quantité d'énergie produite par la réaction étant suffisante pour chauffer les particules dans le giclage.

45. Procédé selon l'une quelconque des revendications 35 à 44, comprenant en outre le maintien d'un écoulement total suffisant de gaz à travers des buses et orifices pour fluidifier des particules au-dessus du giclage dans le lit fluidisé à bulles.
